# EUROPÄISCHE PATENTSCHRIFT

(11) **EP 2 576 884 B1**
(45) Veröffentlichungstag und Bekanntmachung des Hinweises auf die Patenterteilung: **10.03.2021**
(21) Anmeldenummer: 11721516.0
(22) Anmeldetag: 24.05.2011
(51) Int. Cl.: D06F 34/14, G01F 23/24, D06F 39/02, D06F 103/00, D06F 103/22

(54) **HAUSHALTSGERÄT MIT EINEM BEHÄLTER UND EINER FÜLLSTANDSMESSEINRICHTUNG UND ENTSPRECHENDES FÜLLSTANDSMESSVERFAHREN**
HOUSHOLD DEVICE WITH CONTAINER AND FILLING LEVEL MEASURING DEVICE AND A CORRESPONDING PROCEDURE FOR MEASURING THE FILLING LEVEL
APPAREIL MÉNAGER AVEC UNE BOÎTE ET DISPOSITIF POUR LA MESURE DU NIVEAU ET PROCÉDÉ POUR MESURER LE NIVEAU

(30) Priorität: 26.05.2010 DE 102010029307
(43) Veröffentlichungstag der Anmeldung: 10.04.2013
(73) Patentinhaber: BSH Hausgeräte GmbH, 81739 München (DE)
(72) Erfinder: FELDMEIER, Rudolf, 93128 Regenstauf / Eitlbrunn (DE); GIETL, Günter, 93333 Neustadt a.d. Donau (DE); JANKE, Eckhard, 93092 Barbing/Sarching (DE)
(86) Internationale Anmeldenummer: PCT/EP2011/058398
(87) Internationale Veröffentlichungsnummer: WO 2011/147798

(56) Entgegenhaltungen:
- EP-A1- 0 392 196
- DE-A1- 3 136 864
- DE-A1- 3 236 291
- DE-A1-102007 028 214
- FR-A1- 2 205 663
- GB-A- 963 306
- GB-A- 1 192 442

## Beschreibung

Die Erfindung betrifft ein Haushaltsgerät mit einem Behälter zur Aufnahme von Flüssigkeiten, welcher insbesondere zum Bevorraten eines Waschmittels und zur automatischen Dosierung selbigen Waschmittels eingerichtet ist, und einer Füllstandsmesseinrichtung. Die Erfindung betrifft außerdem ein entsprechendes Füllstandsmessverfahren.

Es ist Stand der Technik, Haushaltsgeräte - wie beispielsweise Waschmaschinen - mit einem Vorratsbehälter auszustatten, in welchem ein flüssiges oder gelförmiges Waschmittel bevorratet werden kann. Das Waschmittel kann dann automatisch für einen Waschvorgang dosiert werden. Es kann somit insgesamt das Waschmittel gespart werden, da bei der Dosierung selbigen Waschmittels auch die Beladung der Wäschetrommel berücksichtigt werden kann, wie auch der Verschmutzungsgrad der Wäsche. Durch eine an die jeweils herrschenden Bedingungen angepasste Dosierung können auch gegebenenfalls zusätzliche Spülgänge während eines Waschprozesses in einer Waschmaschine eingespart werden. Aus dem Vorratsbehälter kann ein flüssiges oder gelartiges Waschmittel oder ein Waschhilfsmittel - wie ein Weichspüler - mithilfe einer Zahnradpumpe in eine so genannte Einspülschale gepumpt werden.

Eine Waschmaschine mit einem solchen Vorratsbehälter ist beispielsweise aus der Druckschrift DE 10 2007 028 214 A1 bekannt.

Ferner ist eine Füllstandsüberwachungseinrichtung für ein Vorrats- und Dosiergerät für Wasch- und Spülmittel, die in Behältern eingefüllt sind, aus DE 39 11 862 A1 bekannt. Diese Überwachungseinrichtung umfasst eine Sensoreinrichtung, welche ein Signal generiert, wenn eine Restfüllmenge in dem Behälter erreicht ist.

Eine weitere Füllstandsüberwachungseinrichtung für ein Haushaltsgerät mit einem Behälter zur Aufnahme von Flüssigkeiten ist aus DE 31 36 864 C2 bekannt. Eine solche Füllstandsüberwachungseinrichtung weist eine elektrische Messeinrichtung zum Messen eines Füllstandes in dem Behälter auf. Die Messeinrichtung hat zwei in den Behälter zueinander beabstandet angeordnete Messelektroden sowie eine mit den Messelektroden gekoppelte Schaltungsanordnung, mit welcher zwischen den Messelektroden eine Wechselspannung anlegbar ist und eine von der Wechselspannung und von einer elektrischen Eigenschaft der Flüssigkeit abhängige Messgröße anzeigbar ist. Die Schaltung ist derart ausgelegt, dass die Ausgangsspannungen TTL- bzw. CMOS-Pegel aufweisen, wodurch ein unmittelbarer Anschluss an einen Mikroprozessor möglich ist. Es ist Aufgabe der Erfindung, ein Haushaltsgerät der eingangs genannten Gattung mit einer Füllstandsmesseinrichtung zu schaffen und derart weiterzuentwickeln und zu vereinfachen, dass ein zuverlässiges Erkennen des Füllstands im Behälter gewährleistet ist bzw. - wenn der Behälter zur Bevorratung von Waschmittel dient - dass das Risiko des Einleitens eines Waschprozesses ohne Waschmittel auf ein Minimum reduziert ist.

Diese Aufgabe wird erfindungsgemäß durch ein Haushaltsgerät mit den Merkmalen gemäß Patentanspruch 1, wie auch durch ein Verfahren mit den Merkmalen des Patentanspruchs 11 gelöst. Vorteilhafte Ausführungen der Erfindung sind Gegenstand der abhängigen Patentansprüche und der Beschreibung.

In einem erfindungsgemäßen Haushaltsgerät ist ein Behälter zur Aufnahme von Flüssigkeiten, insbesondere ein Vorratsbehälter zum Bevorraten eines Waschmittels - bzw. eines Waschhilfsmittels - und zur automatischen Dosierung selbigen Waschmittels, eingerichtet. Das Haushaltsgerät weist ferner eine elektrische Messeinrichtung auf, die zum Messen eines Füllstands des Behälters dient. Der Füllstand des Behälters wird somit mithilfe einer elektrischen Messeinrichtung gemessen. Dies hat einerseits den Vorteil, dass ein leerer Behälter durch das Haushaltsgerät signalisiert werden kann - eine Bedienperson des Haushaltsgeräts wird dann über die Notwendigkeit eines Nachfüllens der Flüssigkeit bzw. des Waschmittels informiert und kann den Behälter wieder auffüllen. Andererseits kann die elektrische Messeinrichtung entsprechende Informationssignale mit Informationen über den Füllstand des Behälters an eine zentrale Steuereinheit des Haushaltsgerätes übermitteln, so dass das Einleiten eines Waschprozesses ohne Waschmittel gegebenenfalls verhindert werden kann. Mithilfe einer elektrischen Messeinrichtung kann des Weiteren mit hoher Genauigkeit festgestellt werden, ob Flüssigkeit bzw. das Waschmittel im Behälter überhaupt noch vorhanden ist oder nicht.

Unter einem Haushaltsgerät wird hier insbesondere ein wasserführendes Haushaltsgerät verstanden. Es kann beispielsweise ein Haushaltsgerät zur Pflege von Wäschestücken sein, insbesondere eine Waschmaschine oder ein Waschtrockner.

Erfindungsgemäß weist die Messeinrichtung zwei in dem Behälter zueinander beabstandet angeordnete Messelektroden sowie eine mit den Messelektroden gekoppelte elektrische Schaltungsanordnung auf. Die Schaltungsanordnung kann zwischen den Messelektroden eine Wechselspannung anlegen und zumindest eine mit der Wechselspannung und mit einem Leitwert eines zwischen den Messelektroden befindlichen Mediums korrelierte Messgröße messen. Durch Einsatz von Messelektroden gelingt es, ohne viel Aufwand die Menge einer im Behälter befindlichen Flüssigkeit, insbesondere des Waschmittels, festzulegen, deren Unterschreitung als eine Information über einen leeren Behälter interpretiert werden soll. Dazu kann nämlich ein Abstand zwischen den jeweiligen freien Enden der Messelektroden und einem Boden des Behälters entsprechend eingestellt werden. Durch Beaufschlagen der Messelektroden mit einer Wechselspannung können galvanische Effekte an den Messelektroden vermieden werden. Die Prüfung des Füllstands im Behälter erfolgt also im Wesentlichen mithilfe einer Leitwertmessung. Aufgrund der Leitfähigkeit der Flüssigkeit oder einer Lauge fließt nämlich beim Anlegen der Wechselspannung ein elektrischer Wechselstrom durch die Flüssigkeit bzw. das Waschmittel. Dieser Wechselstrom - und genauer gesagt seine Stromstärke - ist ein Maß dafür, wie leitfähig das Waschmittel ist. Somit kann eindeutig festgestellt werden, ob die Flüssigkeit bzw. das Waschmittel im Behälter überhaupt vorhanden ist oder nicht. Ferner kann somit auch gegebenenfalls die Art der Flüssigkeit, bzw. des Waschmittels - je nach seiner Leitfähigkeit - erkannt werden.

Die Schaltungsanordnung legt abwechselnd an einer der Messelektroden ein positives erstes Potential und an der jeweils anderen Messelektrode ein gegenüber dem ersten Potential geringeres, positives zweites Potential oder ein Potential von 0 Volt an. Zu einem bestimmten Zeitpunkt kann somit die erste Messelektrode am ersten positiven Potential liegen, während die zweite Messelektrode am zweiten positiven Potential oder am Potential 0 Volt liegt. Zu einem weiteren Zeitpunkt kann hingegen die zweite Messelektrode am ersten Potential liegen, während die erste Messelektrode am zweiten Potential oder am Null-Potential liegt. Für die Erzeugung einer rechteckförmigen Wechselspannung ist somit lediglich ein positives Potential erforderlich; die Schaltungsanordnung kommt ohne ein negatives Potential aus - nämlich bezüglich des Null-Potentials. Es entfällt somit die Erzeugung eines negativen Potentials mit den damit verbundenen Nachteilen, nämlich zusätzlichen Bauelementen und dem damit verbundenen Aufwand.

Die Schaltungsanordnung weist erste Schaltmittel auf, mit denen die erste Messelektrode wahlweise mit einem ersten Anschluss oder einem zweiten Anschluss gekoppelt wird. An dem ersten Anschluss kann das positive erste Potential bereitgestellt sein, während an dem zweiten Anschluss das positive zweite Potential oder das Potential von 0 Volt bereitgestellt werden kann. Die Schaltungsanordnung weist auch zweite Schaltmittel auf, die zum Koppeln der zweiten Messelektrode wahlweise mit dem ersten Anschluss oder dem zweiten Anschluss dienen. Solche Schaltmittel können beispielsweise elektrische Schalter - wie Halbleiterschalter und/oder Relais - beinhalten. Die Erfindung hat einerseits den Vorteil, dass die Schaltungsanordnung relativ ohne viel Aufwand aufgebaut werden kann; andererseits sorgen die Schaltmittel für ein schnelles Koppeln der Messelektroden mit dem ersten oder dem zweiten Anschluss. Es kann somit eine solche rechteckförmige Wechselspannung zwischen den Messelektroden bereitgestellt werden, deren Pulsdauer sehr gering ist. Dies hat Vorteile hinsichtlich der Unterdrückung der Galvanisierungseffekt an den Messelektroden, wie auch im Hinblick auf eine schnelle Leitwertmessung. Die Schaltmittel werden bevorzugt zwischen einem ersten Schaltzustand, in welchem die erste Messelektrode mit dem ersten Anschluss und die zweite Messelektrode mit dem zweiten Anschluss gekoppelt sind, und einem zweiten Schaltzustand geschaltet, in welchem die erste Messelektrode mit dem zweiten Anschluss und die zweite Messelektrode mit dem ersten Anschluss gekoppelt sind.

Es erweist sich als besonders vorteilhaft, wenn die Schaltungsanordnung einen Mikrocontroller aufweist und die ersten und/oder die zweiten Schaltmittel in den Mikrocontroller integriert sind. Dann kann ein standardisiertes Bauteil - nämlich der Mikrocontroller - eingesetzt werden, ohne dass zusätzliche, vom Mikrocontroller separate Bauelemente, also Schaltmittel eingesetzt werden müssen. Die Schaltungsanordnung kommt somit insgesamt mit einer sehr geringen Anzahl von Bauelementen aus und kann entsprechend kompakt aufgebaut werden, und es kann wertvoller Bauraum gespart werden.

Es erweist sich als besonders vorteilhaft, wenn die Wechselspannung eine Rechteckspannung ist. Die Pulsdauer dieser Rechteckspannung ist bevorzugt kleiner als 1 ms, insbesondere kleiner als 500 µs. Beispielsweise kann diese Pulsdauer in einem Wertebereich von 1 µs bis 200 µs liegen. Somit ist die Pulslänge der Spannungspulse bzw. der Strompulse sehr kurz, so dass der Effekt der Galvanisierung an den Messelektroden auf ein Minimum reduziert wird. Es kann somit außerdem die Leitwertmessung relativ schnell - nämlich im ms-Bereich - durchgeführt werden. Bei der rechteckförmigen Wechselspannung kann der Tastgrad (duty cycle) in einem Wertebereich von 30% bis 70% liegen.

Die Schaltungsanordnung kann derart ausgebildet sein, dass sie ein Erreichen eines vordefinierten Grenzwertes durch die Messgröße erkennt und als Information über einen leeren Behälter auslegt. Also erfolgt die Füllstandsmessung bei dieser Ausführungsform quasi binär: Die Schaltungsanordnung kann feststellen, ob die Flüssigkeit bzw. das Waschmittel im Behälter gegeben ist oder nicht.

Die ersten Messelektrode und/oder die zweite Messelektrode kann/können jeweils über einen Strombegrenzungswiderstand wahlweise mit dem ersten Anschluss oder dem zweiten Anschluss gekoppelt werden. Dies gilt der Betriebssicherheit: Es wird somit die maximale Stromstärke des durch die Messelektroden fließenden Stromes begrenzt, nämlich bei kurzgeschlossenen Messelektroden.

Die erste Messelektrode kann über einen ersten Messwiderstand mit einem ersten Messeingang des Mikrocontrollers gekoppelt sein. Entsprechend kann - ergänzend oder alternativ - die zweite Messelektrode über einen zweiten Messwiderstand mit einem zweiten Messeingang des Mikrocontrollers gekoppelt sein. Fließt über die Messelektroden elektrischer Strom, so kann dann eine an dem jeweiligen Messwiderstand abfallende elektrische Spannung durch den Mikrocontroller ausgewertet werden. Die Amplitude dieser Spannung ist dann ein Maß für die Stromstärke des Stromes und somit auch für den Leitwert des zwischen den Messelektroden befindlichen Mediums.

Also sind bei der elektrischen Messeinrichtung vorzugsweise lediglich folgende Bauelemente erforderlich: Der Mikrocontroller mit einem ersten und einem zweiten Ausgang und einem ersten und einem zweiten Messeingang sowie mit zwei Anschlüssen für das erste und das zweite Potential oder das Null-Potential, die erste und die zweite Messelektrode, der erste und der zweite Messwiderstand, wie auch der erste und der zweite Strombegrenzungswiderstand. Insgesamt kann somit eine bauteilreduzierte und daher bauraumsparende Messeinrichtung bereitgestellt werden. Eine solche Messeinrichtung ist dann symmetrisch aufgebaut: Die erste Messelektrode ist über den ersten Strombegrenzungswiderstand mit dem ersten Ausgang des Mikrocontrollers sowie über den ersten Messwiderstand mit dem ersten Messeingang des Mikrocontrollers gekoppelt, und die zweite Messelektrode ist über den zweiten Strombegrenzungswiderstand mit dem zweiten Ausgang des Mikrocontrollers sowie über den zweiten Messwiderstand mit dem zweiten Messeingang des Mikrocontrollers gekoppelt. Der Mikrocontroller kann abwechselnd an einem der Ausgänge das positive erste Potential und an dem jeweils anderen Ausgang das positive zweite Potential oder das Potential von 0 Volt bereitstellen. Gleichzeitig misst der Mikrocontroller auch die jeweilige, an den Messwiderständen abfallenden Messspannungen, nämlich an den beiden Messeingängen.

Also kann der Mikrocontroller eine an dem ersten Messeingang anliegende erste elektrische Messspannung als Messgröße und/oder eine an dem zweiten Messeingang anliegende zweite elektrische Messspannung als Messgröße messen. Abhängig von der ersten und/oder der zweiten Messspannung kann der Mikrocontroller feststellen, ob die Flüssigkeit bzw. das Waschmittel im Behälter noch vorhanden ist oder nicht. Und zwar kann der Mikrocontroller auf digitalem Wege die erste und/oder die zweite Messspannung jeweils mit einem Grenzwert vergleichen; das Erreichen des jeweiligen Grenzwertes kann der Mikrocontroller als eine Information über einen leeren Behälter interpretieren. Es erübrigt sich somit der Einsatz von komplexen analogen Schaltungen für die Auswertung der Messspannungen mit den damit verbundenen Nachteilen hinsichtlich des Bauraums und der Kosten.

Es hat sich als besonders vorteilhaft herausgestellt, wenn der Mikrocontroller dazu ausgelegt ist, als Messgröße eine Differenz zwischen der Amplitude der ersten Messspannung und der Amplitude der zweiten Messspannung zu bestimmen. Der Mikrocontroller kann also die Differenz zwischen den Amplituden der Messspannungen berechnen und selbige Differenz im Hinblick auf den Füllstand des Behälters auswerten. Bei der Messung des Füllstands werden somit zwei Messgrößen - nämlich zwei Messspannungen - berücksichtigt, was die Genauigkeit der Füllstandsmessung entsprechend erhöht. Die Berechnung der Differenz hat jedoch auch einen weiteren Vorteil: Auf diesem Wege gelingt es, sich in dem zwischen den Messelektroden befindlichen Medium - nämlich aufgrund von chemischen Reaktionen - bildende parasitäre Elemente, wie parasitäre Spannungsquellen, zu erkennen. Hat sich nämlich eine solche parasitäre Spannungsquelle zwischen den Messelektroden gebildet, so ändert sich die Differenz zwischen den Spannungen deutlich, je nach dem, ob die erste Messelektrode mit dem ersten Potential und die zweite Messelektrode mit dem zweiten Potential beaufschlagt werden oder umgekehrt. In einem Fall überlagert sich nämlich die elektrische Spannung der parasitären Spannungsquelle mit den an den Messwiderständen abfallenden Spannungen, während in dem anderen Fall die elektrische Spannung der parasitären Spannungsquelle subtrahiert werden muss.

Also überprüft die Schaltungsanordnung in einer Ausführungsform das zwischen den Messelektroden befindliche Medium auf das Vorhandensein einer sich in dem Medium aufgrund chemischer Effekte gebildeten parasitären Spannungsquelle, nämlich abhängig von der zumindest einen Messgröße. Es erfolgt bei dieser Ausführungsform also eine zusätzliche Überprüfung des Mediums auf parasitäre Effekte, nämlich auf eine parasitäre Spannungsquelle im Stromkreis der Messelektroden. Das Vorhandensein von solchen parasitären Spannungsquellen kann dann gegebenenfalls der Bedienperson signalisiert werden.

Der Mikrocontroller umfasst bevorzugt eine erste Abtast-Halte-Schaltung (sample and hold), mit welcher die erste Messelektrode gekoppelt ist. Ergänzend oder alternativ kann der Mikrocontroller auch eine zweite Abtast-Halte-Schaltung aufweisen, mit welcher die zweite Messelektrode gekoppelt ist. Somit können die jeweils augenblicklichen Werte der ersten Messspannung und/oder der zweiten Messspannung für eine bestimmte Zeitdauer "gehalten" werden, so dass eine Auswertung der Messspannungen durch den Mikrocontroller auch dann möglich ist, wenn sich die Amplitude der Spannung zwischen den Messelektroden ändert.

Die Messelektroden sind bevorzugt jeweils durch einen Stift gebildet, welcher vorzugsweise aus Metall - insbesondere aus Edelstahl - ausgeführt ist.

Bei einem erfindungsgemäßen Verfahren wird ein Füllstand eines Behälters in einem Haushaltsgerät gemessen. In dem Behälter wird eine Flüssigkeit, insbesondere ein Waschmittel, bevorratet. Vorzugsweise wird die Flüssigkeit bzw. selbiges Waschmittel wird aus dem Behälter automatisch dosiert. Der Füllstand wird mithilfe einer elektrischen Messeinrichtung gemessen, die vorstehend näher erläutert wurde.

Der Behälter ist insbesondere als Vorratsbehälter für die Flüssigkeit bzw. das Waschmittel ausgebildet.

Die mit Bezug auf das erfindungsgemäße Haushaltsgerät vorgestellten bevorzugten Ausführungsformen und deren Vorteile gelten entsprechend für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder auch in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:

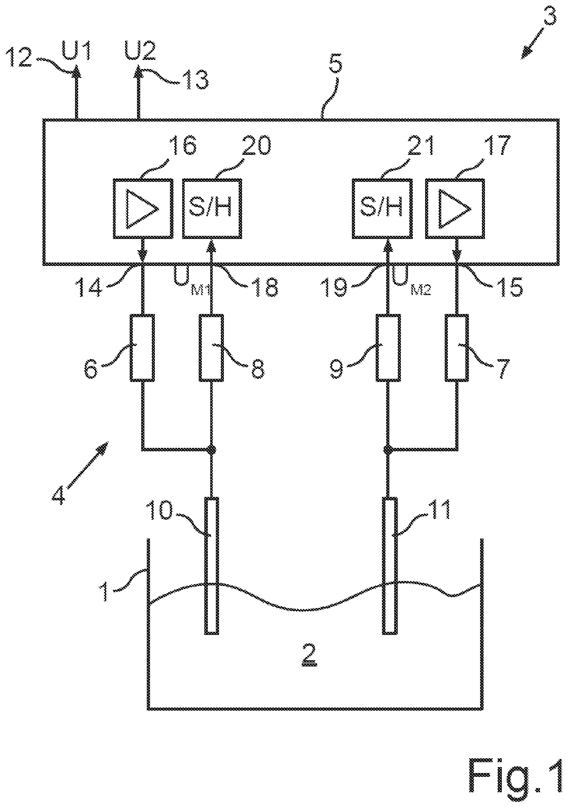

- Fig. 1: in schematischer und höchst abstrakter Darstellung eine elektrische Messeinrichtung gemäß einer Ausführungsform der Erfindung, wobei die Messeinrichtung zum Messen eines Füllstands eines Vorratsbehälters in einem Haushaltsgerät dient;
- Fig. 2: in schematischer Darstellung erste und zweite Schaltmittel eines Mikrocontrollers der Messeinrichtung gemäß Fig. 1;
- Fig. 3a: einen zeitabhängigen Graphen einer rechteckförmigen Wechselspannung, die zwischen zwei Messelektroden der Messeinrichtung angelegt wird; und
- Fig.3b: einen zeitabhängigen Graphen einer Messgröße, die aufgrund der angelegten Wechselspannung gemessen wird.

In einer Waschmaschine befindet sich ein Vorratsbehälter 1 für ein Waschmittel 2 oder ein Waschhilfsmittel. Der Vorratsbehälter 1 ist aus Kunststoff ausgebildet und dient zum Bevorraten des Waschmittels 2 oder des Waschhilfsmittels. Aus dem Vorratsbehälter 1 kann das Waschmittel 2 für einen Waschprozess der Waschmaschine dosiert werden, nämlich mithilfe einer in den Figuren nicht dargestellten Dosiereinrichtung. Das Waschmittel 2 ist ein flüssiges oder gelartiges Medium.

Zum Messen eines Füllstands des Vorratsbehälters 1 ist in der Waschmaschine eine elektrische Messeinrichtung 3 eingerichtet. Sie umfasst eine Schaltungsanordnung 4, die wiederum folgende Bauelemente beinhaltet: einen Mikrocontroller 5, einen ersten und einen zweiten Strombegrenzungswiderstand 6, 7, wie auch einen ersten und einen zweiten Messwiderstand 8, 9. Die Messeinrichtung 3 beinhaltet außerdem eine erste Messelektrode 10 sowie eine zweite Messelektrode 11, die in den Vorratsbehälter 1 hineinragen, nämlich beispielsweise von oben. Die Messelektroden 10, 11 sind elektrisch leitfähige, länglich ausgeführte Stifte aus Edelstahl.

Der Mikrocontroller 5 weist einen ersten Anschluss 12 auf, wie auch einen zweiten Anschluss 13. Am ersten Anschluss 12 ist ein erstes Potential U1 bereitgestellt, während am zweiten Anschluss 13 ein Potential U2 anliegt. Das erste Potential U1 ist ein positives elektrisches Potential und beträgt beispielsweise 5 Volt. Für das Potential U2 gilt im Ausführungsbeispiel: U2 = 0 Volt. Die Potentiale U1, U2 werden beispielsweise von einem Netzteil erzeugt und an den Anschlüssen 12, 13 bereitgestellt.

Der Mikrocontroller 5 weist ferner einen ersten Ausgang 14 sowie einen zweiten Ausgang 15 auf. Die Ausgänge 14, 15 können wahlweise mit dem ersten Anschluss 12 oder dem zweiten Anschluss 13 gekoppelt werden, nämlich mithilfe jeweiliger Schaltmittel 16, 17. Mithilfe der ersten Schaltmittel 16 kann der erste Ausgang 14 also wahlweise entweder mit dem ersten Anschluss 12 oder mit dem zweiten Anschluss 13 gekoppelt werden. Auch der zweite Ausgang 15 kann mithilfe der zweiten Schaltmittel 17 entsprechend entweder mit dem ersten Anschluss 12 oder dem zweiten Anschluss 13 gekoppelt werden. Die Ausgänge 14, 15 können auch gleichzeitig mit dem ersten Anschluss 12 oder mit dem zweiten Anschluss 13 gekoppelt sein. Insbesondere im ausgeschalteten Zustand der Messeinrichtung 3 werden die Anschlüsse 14 und 15 mit dem zweiten Anschluss 13 gekoppelt. Hierdurch wird vermieden, dass ein kontinuierlicher Strom über das im Vorratsbehälter 1 vorhandene Medium fließen kann. Somit können keine galvanischen Effekte im abgeschalteten Zustand der Messeinrichtung 3 auftreten.

Der Mikrocontroller 5 weist außerdem einen ersten und einen zweiten Messeingang 18, 19 auf. Der Mikrocontroller 5 umfasst auch eine erste und eine zweite Abtast-Halte-Schaltung 20, 21: Die erste Abtast-Halte-Schaltung 20 ist mit dem ersten Messeingang 18 verbunden, während die zweite Abtast-Halte-Schaltung 21 mit dem zweiten Messeingang 19 verbunden ist.

Die erste Messelektrode 10 ist über den ersten Strombegrenzungswiderstand 6 mit dem ersten Ausgang 14 des Mikrocontrollers 5 und zusätzlich über den ersten Messwiderstand 8 mit dem ersten Messeingang 18 des Mikrocontrollers 5 gekoppelt. Die zweite Messelektrode 11 ist entsprechend über den zweiten Strombegrenzungswiderstand 7 mit dem zweiten Ausgang 15 des Mikrocontrollers 5 und außerdem über den zweiten Messwiderstand 9 mit dem zweiten Messeingang 19 des Mikrocontrollers 5 gekoppelt.

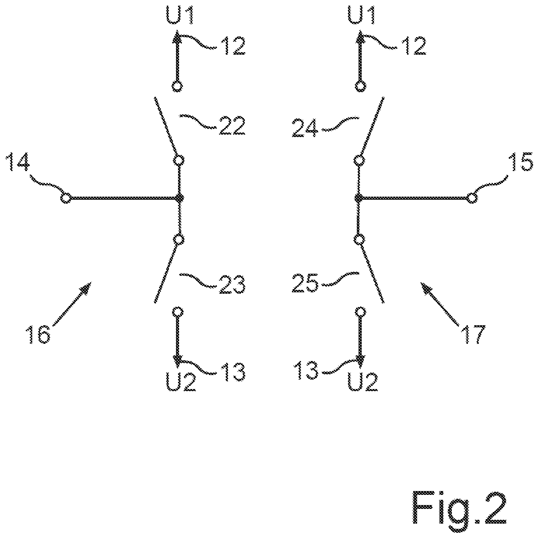

Fig. 2 zeigt in schematischer Darstellung die ersten und die zweiten Schaltmittel 16, 17, über welche der erste respektive der zweite Ausgang 14, 15 des Mikrocontrollers 5 wahlweise mit dem ersten oder dem zweiten Anschluss 12, 13 gekoppelt werden kann. Die ersten und die zweiten Schaltmittel 16, 17 sind jeweils in Form einer Halbbrücke mit elektrischen Schaltern bereitgestellt. Die ersten Schaltmittel 16 beinhalten einen ersten elektrischen Schalter 22, wie auch einen zweiten elektrischen Schalter 23. Über den ersten Schalter 22 kann der erste Ausgang 14 mit dem ersten Anschluss 12 und somit dem ersten Potential U1 gekoppelt werden; über den zweiten Schalter 23 kann der erste Ausgang 14 mit dem zweiten Anschluss 13 und somit dem Null-Potential U2 gekoppelt werden. Entsprechend beinhalten die zweiten Schaltmittel 17 einen ersten elektrischen Schalter 24, über welchen der zweite Ausgang 15 mit dem ersten Anschluss 12 gekoppelt werden kann, sowie einen zweiten elektrischen Schalter 25, über welchen der zweite Ausgang 15 mit dem zweiten Anschluss 13 gekoppelt werden kann. Alle in Fig. 2 gezeigte Schalter 22, 23, 24, 25 können beispielsweise Halbleiterschalter sein, nämlich insbesondere Bipolartransistoren.

Die Messung des Füllstands des Vorratsbehälters 1 erfolgt folgendermaßen: Der Mikrocontroller 5 stellt zwischen den Messelektroden 10, 11 eine Wechselspannung bereit. Prinzipiell könnte diese Spannung eine sinusförmige Wechselspannung sein. Im Ausführungsbeispiel ist diese Wechselspannung eine rechteckförmige Spannung. Dazu beaufschlagt der Mikrocontroller 5 abwechselnd eine der Messelektroden 10, 11 mit dem ersten Potential U1 und die jeweils andere Messelektroden 10, 11 mit dem Null-Potential U2. Und zwar liegt am ersten Ausgang 14 das erste Potential U1 an, wenn am zweiten Ausgang 15 das Potential U2 (0 Volt) anliegt und umgekehrt. Gleichzeitig können also paarweise die elektrischen Schalter 22 und 25 oder 23 und 24 geschlossen sein.

Zum Erzeugen der rechteckförmigen Spannung können also folgende Schritte wiederholt werden:
- Schließen der Schalter 22 und 25;
- Öffnen der Schalter 22 und 25;
- Schließen der Schalter 23 und 24;
- Öffnen der Schalter 23 und 24 und so weiter.

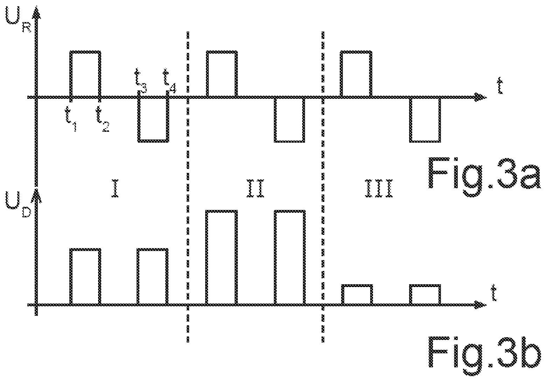

Ein beispielhafter Verlauf einer solchen rechteckförmigen Wechselspannung U_{R} über der Zeit t ist in Fig. 3a gezeigt. Zu einem ersten Zeitpunkt t₁ werden die elektrischen Schalter 22 und 25 geschlossen, so dass der erste Ausgang 14 am ersten Potential U1 und der zweite Ausgang 15 am zweiten Potential U2 liegen. Zu einem weiteren Zeitpunkt t₂ werden die Schalter 22, 25 wieder geöffnet. Eine Zeitdauer eines solchen Spannungsimpulses, mit welchem die Messelektroden 10, 11 beaufschlagt werden, kann beispielsweise in einem Wertebereich von 1 µs bis 500 µs liegen. Zu einem weiteren Zeitpunkt t₃ werden die Schalter 23 und 24 geschlossen, so dass nun der erste Ausgang 14 am Potential U2 und der zweite Ausgang 15 am ersten Potential U1 liegen. Die Schalter 23, 24 verbleiben ebenfalls für eine Zeitdauer eines Spannungsimpulses geschlossen, nämlich bis zu einem weiteren Zeitpunkt t₄. Der Abstand zwischen den einzelnen Spannungsimpulsen kann in einem Wertebereich von 0 bis 1 ms, insbesondere in einem Wertebereich von 0 bis 500 µs, liegen.

Liegt an dem ersten Ausgang 14 das erste Potential U1 und an dem zweiten Ausgang 15 das Null-Potential U2 an (zwischen den Zeitpunkten t₁ und t₂), so fließt über die Messelektroden 10, 11 ein elektrischer Strom, wenn sich das Waschmittel 2 in dem Vorratsbehälter 1 befindet. Das flüssige Waschmittel 2 ist nämlich elektrisch leitfähig; je nach seinem Leitwert bzw. seinem ohmschen Widerstand kann ein Spannungsabfall an dem Waschmittel 2 unterschiedlich sein. Es fällt auch eine elektrische Spannung an den Messwiderständen 8, 9 ab, nämlich eine erste Messspannung U_{M1} einerseits und eine zweite Messspannung U_{M2} andererseits. Diese Messspannungen U_{M1}, U_{M2} liegen an dem ersten respektive dem zweiten Messeingang 18, 19 des Mikrocontrollers 5. Der Mikrocontroller 5 erfasst die Messspannungen U_{M1}, U_{M2} als Messgrößen und bestimmt abhängig von diesen Messgrößen den Füllstand des Vorratsbehälters 1. Und zwar kann der Mikrocontroller 5 abhängig von den Messspannungen U_{M1}, U_{M2} feststellen, ob durch die Messelektroden, 10, 11 elektrischer Strom fließt und somit sich das Waschmittel 2 im Vorratsbehälter 1 befindet oder nicht.

Und zwar wertet der Mikrocontroller 5 die Messspannungen U_{M1}, U_{M2} digital aus. Dazu kann in den Mikrokotroller 5 beispielsweise ein Analog-Digital-Wandler integriert sein, mit welchem die Messspannungen U_{M1}, U_{M2} diskretisiert bzw. analog-digital-gewandelt werden.

Liegt am ersten Ausgang 14 das erste Potential U1 und am zweiten Ausgang 15 das Potential U2 = 0 Volt an, so fließt der Strom von dem ersten Ausgang 14 über die Messelektroden 10, 11 hin zu dem zweiten Ausgang 15. Da das erste Potential U1 größer als das Potential U2 ist, ist auch die Amplitude der ersten Messspannung U_{M1} größer als die der zweiten Messspannung U_{M2}. Liegt hingegen das erste Potential U1 am zweiten Ausgang 15 und das zweite Potential U2 am ersten Ausgang 14 an, so ist die Amplitude der zweiten Messspannung U_{M2} größer als die der ersten Messspannung U_{M1}.

Befindet sich das Waschmittel im Vorratsbehälter 1, so ist zwischen den Messelektroden 10, 11 quasi ein ohmscher Widerstand mit einem Widerstandswert - je nach Waschmittel - von 10 Ω bis 5 k Ω geschaltet. Ist hingegen kein Waschmittel 2 im Vorratsbehälter 1 vorhanden, so sind die Messelektroden 10, 11 voneinander elektrisch entkoppelt. Wenn der erste Ausgang 14 am ersten Potential U1 und er zweite Ausgang 15 am Potential U2 = 0 Volt liegt, so sind zwei Extremfälle möglich: Die erste Messspannung U_{M1} ist annähernd gleich dem ersten Potential U1 und die zweite Messspannung U_{M2} beträgt 0 Volt, wenn kein Waschmittel 2 vorhanden ist. Liegt hingegen ein Kurzschluss zwischen den Messelektroden 10, 11 vor, so sind die Amplituden der Messspannungen U_{M1}, U_{M2} gleich.

Der Mikrocontroller 5 berechnet eine Differenz zwischen den Amplituden der Messspannungen U_{M1}, U_{M2}. Auch diese Differenz ist eine Messgröße. Liegt ein Kurzschluss zwischen den Messelektroden 10, 11 vor, so ist die Differenz gleich 0 Volt. Ist hingegen kein Waschmittel 2 im Vorratsbehälter 1 vorhanden, so entspricht diese Differenz ungefähr dem Wert des ersten Potentials U1 (5 Volt). Der Mikrocontroller 5 kann also auch anhand der Differenz feststellen, ob das Waschmittel 2 im Vorratsbehälter 1 vorhanden ist oder nicht. Ist nämlich das Waschmittel 2 im Vorratsbehälter 1 nicht gegeben, so überschreitet die Differenz einen vordefinierten Grenzwert, der beispielsweise in einem Wertebereich von U1 - 1 Volt bis U1, also von 4 Volt bis 5 Volt liegen kann. Dieses Überschreiten interpretiert der Mikrocontroller 5 als eine Information über einen leeren Vorratsbehälter 1 und gibt ein entsprechendes Informationssignal aus, nämlich an eine zentrale Steuereinrichtung der Waschmaschine. Ein solches Informationssignal kann beispielsweise ein Aufleuchten eines Leuchtmittels an einer Bedienblende der Waschmaschine veranlassen.

Der Mikrocontroller 5 überprüft auch anhand der berechneten Differenz, ob sich im Waschmittel 2 gegebenenfalls parasitäre Spannungsquellen gebildet haben, nämlich aufgrund von chemischen bzw. parasitären Effekten. Zur Erkennung einer solchen parasitären Spannungsquelle vergleicht der Mikrocontroller 5 die Differenz zwischen den Messspannungen U_{M1}, U_{M2}, wenn die erste Messelektrode 10 mit dem ersten Potential U1 und die zweite Messelektrode 11 mit dem Potential U2 beaufschlagt wird, mit einer Differenz zwischen den Messspannungen U_{M1}, U_{M2}, wenn die Messelektroden 10, 11 mit umgekehrter Polarität bestromt werden. Überschreitet die Abweichung zwischen diesen Differenzen einen vorbestimmten Grenzwert, so interpretiert dies der Mikrocontroller 5 als eine Information über das Vorhandensein einer parasitären Spannungsquelle im Waschmittel 2.

Fig. 3b zeigt einen Verlauf der Differenz U_{D} zwischen Amplituden der Messspannungen U_{M1}, U_{M2} über der Zeit t. Dies ist ebenfalls ein pulsförmiger Verlauf; die Differenz U_{D} ist nämlich dann messbar, wenn die elektrische Spannung U_{R} zwischen den Messelektroden 10, 11 anliegt. In Fig. 3b sind die Impulse für drei unterschiedliche Szenarien I, II, III dargestellt, nämlich für drei unterschiedliche Arten des Wachmittels 2. Die Impulse der Differenz U_{D} sind jeweils den Spannungsimpulsen der Wechselspannung U_{R} (Fig. 3a) gegenübergestellt. Gemäß dem Szenario I wird ein mittlerer Leitwert des Waschmittels 2 detektiert; gemäß Szenario II ein geringer Leitwert - die Differenz U_{D} ist relativ groß, und gemäß dem Szenario III ein hoher Leitwert des Waschmittels 2.

Insgesamt wird also eine bauteilreduzierte und bauraumsparende elektrische Messeinrichtung 3 bereitgestellt, mit welcher eine Füllstand-Grenzwertmessung in einem Vorratsbehälter 1 einer Waschmaschine mit höchster Genauigkeit durchgeführt werden kann. Eine Besonderheit der Messeinrichtung 3 liegt darin, dass die Wechselspannung U_{R} zwischen den Messelektroden 10, 11 direkt aus einem Mikrocontroller geliefert wird und somit der Schaltungsaufwand auf ein Minimum reduziert ist. Die maximale Stromstärke wird dabei mit den Strombegrenzungswiderständen 6, 7 begrenzt. Weiterhin liegt eine Besonderheit in der Folge von Spannungsimpulsen der Wechselspannung U_{R} vor - die Pulslänge ist sehr kurz und liegt im µs-Bereich. Somit kann der Effekt der Galvanisierung an den Messelektroden 10, 11 auf ein Minimum reduziert werden und somit die Leitwertmessung relativ schnell - im ms-Bereich - durchgeführt werden.

### Bezugszeichenliste

- 1: Vorratsbehälter
- 2: Waschmittel
- 3: Messeinrichtung
- 4: Schaltungsanordnung
- 5: Mikrocontroller
- 6,7: Strombegrenzungswiderstände
- 8, 9: Messwiderstände
- 10, 11: Messelektroden
- 12, 13: Anschlüsse
- 14, 15: Ausgänge
- 16, 17: Schaltmittel
- 18, 19: Messeingänge
- 20, 21: Abtast-Halte-Schaltungen
- 22, 23, 24, 25: elektrische Schalter
- U1: erstes Potential
- U2: Potential von 0 Volt
- U_{R}: rechteckförmige Wechselspannung
- t: Zeit
- t₁ bis t₄: Zeitpunkte
- U_{M1}: erste Messspannung
- U_{M2}: zweite Messspannung
- U_{D}: Differenz

## Patentansprüche

1. Haushaltsgerät mit einem Behälter (1) zur Aufnahme von Flüssigkeiten, der insbesondere zum Bevorraten eines Waschmittels (2) und zur automatischen Dosierung selbigen Waschmittels (2) eingerichtet ist, und mit einer elektrischen Messeinrichtung (3) zum Messen eines Füllstands des Behälters (1), welche zwei in dem Behälter (1) zueinander beabstandet angeordnete Messelektroden (10, 11) sowie eine mit den Messelektroden (10, 11) gekoppelte Schaltungsanordnung (4) aufweist, die dazu ausgebildet ist, abwechselnd an einer der Messelektroden (10, 11) ein positives erstes Potential (U1) und an der jeweils anderen Messelektrode (10, 11) ein gegenüber dem ersten Potential (U1) geringeres, positives zweites Potential oder ein Potential (U2) von 0 Volt und somit eine Wechselspannung (UR) zwischen den Messelektroden (10, 11) anzulegen und zumindest eine mit der Wechselspannung (UR) und mit einem Leitwert eines zwischen den Messelektroden befindlichen Mediums (2) korrelierte Messgröße (UM1, UM2, UD) zu messen, **dadurch gekennzeichnet, dass** die Schaltungsanordnung (4) ein erstes Schaltmittel (16) aufweist, mit dem die erste Messelektrode (10) wahlweise mit einem ersten Anschluss (12), an welchem ein positives erstes Potential (U1) anliegt, oder einem zweiten Anschluss (13), an welchem ein gegenüber dem ersten Potential geringeres, positives zweites Potential oder ein Potential (U2) von 0 Volt anliegt, koppelbar ist, und dass die Schaltungsanordnung (4) ein zweites Schaltmittel (17) aufweist, mit dem die zweite Messelektrode (11) wahlweise mit dem ersten Anschluss (12) oder dem zweiten Anschluss (13) koppelbar ist.

2. Haushaltsgerät nach Anspruch 1, **dadurch gekennzeichnet, dass** die Schaltungsanordnung (4) einen Mikrocontroller (5) aufweist und die ersten und/oder die zweiten Schaltmittel (16, 17) in den Mikrocontroller (5) integriert sind.

3. Haushaltsgerät nach einem der Ansprüche 1 oder 2, **dadurch gekennzeichnet, dass** die Wechselspannung (U_{R}) eine Rechteckspannung ist, deren Pulsdauer kleiner als 1 ms, insbesondere kleiner als 500 µs, ist.

4. Haushaltsgerät nach einem der Ansprüche 1 bis 3, **dadurch gekennzeichnet, dass** die Schaltungsanordnung (4) dazu ausgebildet ist, ein Erreichen eines vordefinierten Grenzwertes durch die Messgröße (U_{M1}, U_{M2}, U_{D}) zu erkennen und als Information über einen leeren Behälter auszulegen.

5. Haushaltsgerät nach einem der Ansprüche 1 bis 4, **dadurch gekennzeichnet, dass** die erste Messelektrode (10) und/oder die zweite Messelektrode (11) jeweils über einen Strombegrenzungswiderstand (6, 7) wahlweise mit einem ersten Anschluss (12), an welchem ein positives erstes Potential (U1) anliegt, oder einem zweiten Anschluss (13), an welchem ein gegenüber dem ersten Potential geringeres, positives zweites Potential oder ein Potential (U2) von 0 Volt anliegt, koppelbar ist/sind.

6. Haushaltsgerät nach einem der Ansprüche 1 bis 5, **dadurch gekennzeichnet, dass** die Schaltungsanordnung (4) einen Mikrocontroller (5) aufweist und die erste Messelektrode (10) über einen ersten Messwiderstand (8) mit einem ersten Messeingang (18) des Mikrocontrollers (5) und/oder die zweite Messelektrode (11) über einen zweiten Messwiderstand (9) mit einem zweiten Messeingang (19) des Mikrocontrollers (5) gekoppelt ist/sind.

7. Haushaltsgerät nach Anspruch 6, **dadurch gekennzeichnet, dass** der Mikrocontroller (5) dazu ausgelegt ist, eine an dem ersten Messeingang (18) anliegende erste elektrische Messspannung (U_{M1}) als Messgröße und/oder eine an dem zweiten Messeingang (19) anliegende zweite elektrische Messspannung (U_{M2}) als Messgröße zu messen.

8. Haushaltsgerät nach Anspruch 7, **dadurch gekennzeichnet, dass** der Mikrocontroller (5) dazu ausgelegt ist, als Messgröße eine Differenz (U_{D}) zwischen der Amplitude der ersten Messspannung (U_{M1}) und der Amplitude der zweiten Messspannung (U_{M2}) zu bestimmen.

9. Haushaltsgerät nach einem der Ansprüche 1 bis 8, **dadurch gekennzeichnet, dass** die Schaltungsanordnung (4) einen Mikrocontroller (5) aufweist, der eine erste Abtast-Halte-Schaltung (20), mit welcher die erste Messelektrode (10) gekoppelt ist, und/oder eine zweite Abtast-Halte-Schaltung (21) aufweist, mit welcher die zweite Messelektrode (11) gekoppelt ist.

10. Haushaltsgerät nach Anspruch 8 oder nach Anspruch 9 umfassend die Merkmale des Anspruchs 8, **dadurch gekennzeichnet, dass** die Schaltungsanordnung (4) dazu ausgelegt ist, eine Änderung der Differenz (U_{D}) abhängig davon, ob die erste Messelektrode (10) mit dem ersten Potential (U1) und die zweite Messelektrode (11) mit dem zweiten Potential (U2) beaufschlagt werden oder umgekehrt, zu erkennen und als Information über ein Vorhandensein einer sich in dem zwischen den Messelektroden (10, 11) befindliche Medium (2) aufgrund chemischer Effekte gebildeten parasitären Spannungsquelle auszulegen.

11. Verfahren zum Messen eines Füllstands eines Behälters zur Aufnahme von Flüssigkeiten (1) in einem Haushaltsgerät, wobei insbesondere in dem Behälter ein Waschmittel (2) bevorratet wird und selbiges Waschmittel (2) aus dem Vorratsbehälter (1) automatisch dosiert wird, wobei der Füllstand mittels einer elektrischen Messeinrichtung (3) gemessen wird, zum Bestimmen des Füllstandes mittels der elektrischen Messeinrichtung (3), welche zwei in dem Behälter (1) zueinander beabstandet angeordnete Messelektroden (10, 11) sowie eine mit den Messelektroden (10, 11) gekoppelte Schaltungsanordnung (4) aufweist, abwechselnd an einer der Messelektroden (10, 11) ein positives erstes Potential (U1) und an der jeweils anderen Messelektrode (10, 11) ein gegenüber dem ersten Potential (U1) geringeres, positives zweites Potential oder ein Potential (U2) von 0 Volt und somit eine Wechselspannung (UR) zwischen den Messelektroden (10, 11) angelegt werden und zumindest eine mit der Wechselspannung (UR) und mit einem Leitwert eines zwischen den Messelektroden befindlichen Mediums (2) korrelierte Messgröße (UM1, UM2, UD) gemessen wird, **dadurch gekennzeichnet, dass** mit einem ersten Schaltmittel (16) der Schaltungsanordnung (4) die erste Messelektrode (10) wahlweise mit einem ersten Anschluss (12), an welchem ein positives erstes Potential (U1) anliegt, oder mit einem zweiten Anschluss (13), an welchem ein gegenüber dem ersten Potential geringeres, positives zweites Potential oder ein Potential (U2) von 0 Volt anliegt, gekoppelt wird, und dass mit einem zweiten Schaltmittel (17) der Schaltungsanordnung (4) die zweite Messelektrode (11) wahlweise mit dem ersten Anschluss (12) oder dem zweiten Anschluss (13) gekoppelt wird.

## Claims

1. Household appliance having a container (1) for holding liquids, which is set up in particular to store a detergent (2) and to automatically dose said detergent (2), and having an electric measuring facility (3) for measuring a fill level of the container (1), which has two measuring electrodes (10, 11) disposed at a distance from one another in the container (1), and a circuit arrangement (4) coupled to the measuring electrodes (10, 11), which is configured alternately to apply a positive first potential (U1) at one of the measuring electrodes (10, 11) and a positive second potential, which is lower than the first potential (U1), or a potential (U2) of 0 volts at the respective other measuring electrode (10, 11), and thus to apply an AC voltage (UR) between the measuring electrodes (10, 11) and to measure at least one measurement variable (UM1, UM2, UD) correlated with the AC voltage (UR) and with a conductance of a medium (2) present between the measuring electrodes, **characterised in that** the circuit arrangement (4) has a first switching means (16), which can be used to couple the first measuring electrode (10) optionally to a first connection (12), at which a positive first potential (U1) is present, or to a second connection (13), at which a positive second potential, which is lower than the first potential, or a potential (U2) of 0 volts is present, and that the circuit arrangement (4) has a second switching means (17), which can be used to couple the second measuring electrode (11) optionally to the first connection (12) or to the second connection (13).

2. Household appliance according to claim 1, **characterised in that** the circuit arrangement (4) has a microcontroller (5) and the first and/or second switching means (16, 17) are integrated in the microcontroller (5).

3. Household appliance according to claim 1 or 2, **characterised in that** the AC voltage (U_{R}) is a square wave voltage, the pulse duration of which is shorter than 1 ms, in particular shorter than 500 µs.

4. Household appliance according to one of claims 1 to 3, **characterised in that** the circuit arrangement (4) is configured to detect the reaching of a predefined limit value by the measurement variable (U_{M1}, U_{M2}, U_{D}) and to interpret it as an indication of an empty container.

5. Household appliance according to one of claims 1 to 4, **characterised in that** the first measuring electrode (10) and/or the second measuring electrode (11) can be coupled respectively by way of a current-limiting resistor (6, 7) optionally to a first connection (12), at which a positive first potential (U1) is present, or to a second connection (13), at which a positive second potential, which is lower than the first potential, or a potential (U2) of 0 volts is present.

6. Household appliance according to one of claims 1 to 5, **characterised in that** the circuit arrangement (4) has a microcontroller (5) and the first measuring electrode (10) is coupled by way of a first measuring resistor (8) to a first measuring input (18) of the microcontroller (5) and/or the second measuring electrode (11) is coupled by way of a second measuring resistor (9) to a second measuring input (19) of the microcontroller (5).

7. Household appliance according to claim 6, **characterised in that** the microcontroller (5) is designed to measure a first electric measurement voltage (U_{M1}) present at the first measuring input (18) as a measurement variable and/or to measure a second electric measurement voltage (U_{M2}) present at the second measuring input (19) as a measurement variable.

8. Household appliance according to claim 7, **characterised in that** the microcontroller (5) is designed to determine a difference (U_{D}) between the amplitude of the first measurement voltage (U_{M1}) and the amplitude of the second measurement voltage (U_{M2}) as a measurement variable.

9. Household appliance according to one of claims 1 to 8, **characterised in that** the circuit arrangement (4) has a microcontroller (5), which has a first sample and hold circuit (20), to which the first measuring electrode (10) is coupled, and/or a second sample and hold circuit (21), to which the second measuring electrode (11) is coupled.

10. Household appliance according to claim 8 or according to claim 9, comprising the features of claim 8, **characterised in that** the circuit arrangement (4) is designed to identify a change in the difference (U_{D}) depending on whether the first measuring electrode (10) and the second measuring electrode (1) are applied with the first potential (U1) and with the second potential (U2) in each instance or vice versa, and to interpret this as an indication of a presence of a parasitic voltage source that has formed in the medium (2) located between the measuring electrodes (10, 11) due to chemical effects.

11. Method for measuring a fill level of a container (1) for holding liquids in a household appliance, with detergent (2) in particular being stored in the container and said detergent (2) being automatically dosed from the storage container (1), the fill level being measured by means of an electric measuring facility (3), to determine the fill level by means of the electric measuring facility (3), which has two measuring electrodes (10, 11) disposed at a distance from one another in the container (1), and a circuit arrangement (4) coupled to the measuring electrodes (10, 11), a positive first potential (U1) being applied alternately at one of the measuring electrodes (10, 11) and a positive second potential, which is lower than the first potential (U1), or a potential (U2) of 0 volts being applied at the respective other measuring electrode (10, 11), and thus an AC voltage (UR) being applied between the measuring electrodes (10, 11) and at least one measurement variable (UM1, UM2, UD) correlated with the AC voltage (UR) and with a conductance of a medium (2) present between the measuring electrodes being measured, **characterised in that** a first switching means (16) of the circuit arrangement (4) is used to couple the first measuring electrode (10) optionally to a first connection (12), at which a positive first potential (U1) is present, or to a second connection (13), at which a positive second potential, which is lower than the first potential, or a potential (U2) of 0 volts is present, and that a second switching means (17) of the circuit arrangement (4) is used to couple the second measuring electrode (11) optionally to the first connection (12) or to the second connection (13).

## Revendications

1. Appareil ménager comprenant une cuve (1) pour le logement de liquides, laquelle est notamment aménagée pour stocker un détergent (2) et pour le dosage automatique de ce même détergent (2), et comprenant un dispositif de mesure (3) électrique destiné à mesurer un niveau de remplissage de la cuve (1), lequel comprend deux électrodes de mesure (10, 11) disposées à distance l'une de l'autre dans la cuve (1) ainsi qu'un agencement de commutation (4) couplé aux électrodes de mesure (10, 11), lequel est réalisé pour appliquer en alternance à l'une des électrodes de mesure (10, 11) un premier potentiel positif (U1) et à l'autre électrode de mesure (10, 11) respective un deuxième potentiel positif (U2) plus faible par rapport au premier potentiel (U1), ou un potentiel (U2) de 0 volt, et donc une tension alternative (UR) entre les électrodes de mesure (10, 11), et pour mesurer au moins une grandeur de mesure (UM1, UM2, UD) corrélée avec la tension alternative (UR) et avec une conductibilité d'un milieu (2) se trouvant entre les électrodes de mesure, **caractérisé en ce que** l'agencement de commutation (4) comprend un premier moyen de commutation (16) à l'aide duquel la première électrode de mesure (10) peut être sélectivement couplée à un premier raccordement (12) auquel un premier potentiel positif (U1) est appliqué, ou à un deuxième raccordement (13) auquel un deuxième potentiel positif (U2) plus faible par rapport au premier potentiel, ou un potentiel (U2) de 0 volt, est appliqué, et **en ce que** l'agencement de commutation (4) comprend un deuxième moyen de commutation (17) à l'aide duquel la deuxième électrode de mesure (11) peut être sélectivement couplée au premier raccordement (12) ou au deuxième raccordement (13).

2. Appareil ménager selon la revendication 1, **caractérisé en ce que** l'agencement de commutation (4) comprend un microcontrôleur (5) et **en ce que** les premiers et/ou les deuxièmes moyens de commutation (16, 17) sont intégrés dans le microcontrôleur (5).

3. Appareil ménager selon l'une quelconque des revendications 1 ou 2, **caractérisé en ce que** la tension alternative (U_{R}) est une tension rectangulaire dont la durée de pulsation est inférieure à 1 ms, notamment inférieure à 500 µs.

4. Appareil ménager selon l'une quelconque des revendications 1 à 3, **caractérisé en ce que** l'agencement de commutation (4) est réalisé pour identifier, au moyen de la grandeur de mesure (U_{M1}, U_{M2}, U_{D}), une obtention d'une valeur limite prédéfinie et pour l'interpréter en tant qu'information sur une cuve vide.

5. Appareil ménager selon l'une quelconque des revendications 1 à 4, **caractérisé en ce que** la première électrode de mesure (10) et/ou la deuxième électrode de mesure (11) peut/peuvent, respectivement par l'intermédiaire d'une résistance de limitation de courant (6, 7), être sélectivement couplée(s) à un premier raccordement (12) auquel un premier potentiel positif (U1) est appliqué, ou à un deuxième raccordement (13) auquel un deuxième potentiel positif plus faible par rapport au premier potentiel, ou un potentiel (U2) de 0 volt, est appliqué.

6. Appareil ménager selon l'une quelconque des revendications 1 à 5, **caractérisé en ce que** l'agencement de commutation (4) comprend un microcontrôleur (5) et **en ce que** la première électrode de mesure (10) est couplée à une première entrée de mesure (18) du microcontrôleur (5) par l'intermédiaire d'une première résistance de mesure (8), et/ou **en ce que** la deuxième électrode de mesure (11) est couplée à une deuxième entrée de mesure (19) du microcontrôleur (5) par l'intermédiaire d'une deuxième résistance de mesure (9).

7. Appareil ménager selon la revendication 6, **caractérisé en ce que** le microcontrôleur (5) est conçu pour mesurer, en tant que grandeur de mesure, une première tension de mesure (U_{M1}) électrique appliquée à la première entrée de mesure (18) et/ou pour mesurer, en tant que grandeur de mesure, une deuxième tension de mesure (U_{M2}) électrique appliquée à la deuxième entrée de mesure (19).

8. Appareil ménager selon la revendication 7, **caractérisé en ce que** le microcontrôleur (5) est conçu pour déterminer, en tant que grandeur de mesure, une différence (U_{D}) entre l'amplitude de la première tension de mesure (U_{M1}) et l'amplitude de la deuxième tension de mesure (U_{M2}).

9. Appareil ménager selon l'une quelconque des revendications 1 à 8, **caractérisé en ce que** l'agencement de commutation (4) comprend un microcontrôleur (5) qui comprend un premier circuit échantillonneur-bloqueur (20) auquel la première électrode de mesure (10) est couplée, et/ou comprend un deuxième circuit échantillonneur-bloqueur (21) auquel la deuxième électrode de mesure (11) est couplée.

10. Appareil ménager selon la revendication 8 ou la revendication 9 comprenant les caractéristiques de la revendication 8, **caractérisé en ce que** l'agencement de commutation (4) est conçu pour identifier une modification de la différence (U_{D}) en fonction du fait si la première électrode de mesure (10) est alimentée avec le premier potentiel (U1) et si la deuxième électrode de mesure (11) est alimentée avec le deuxième potentiel (U2) ou inversement, et pour l'interpréter en tant qu'information sur une présence d'une source de tension parasitaire formée en raison d'effets chimiques dans un milieu (2) se trouvant entre les électrodes de mesure (10, 11).

11. Procédé de mesure d'un niveau de remplissage d'une cuve destinée à loger des liquides (1) dans un appareil ménager, dans lequel un détergent (2) est stocké notamment dans la cuve et dans lequel ce même détergent (2) est automatiquement dosé hors de la cuve de stockage (1), dans lequel le niveau de remplissage est mesuré au moyen d'un dispositif de mesure (3) électrique afin de déterminer le niveau de remplissage au moyen du dispositif de mesure (3) électrique, lequel comprend deux électrodes de mesure (10, 11) disposées à distance l'une de l'autre dans la cuve (1) ainsi qu'un agencement de commutation (4) couplé aux électrodes de mesure (10, 11), dans lequel un premier potentiel positif (U1) est appliqué en alternance à l'une des électrodes de mesure (10, 11) et un deuxième potentiel positif plus faible par rapport au premier potentiel (U1), ou un potentiel (U2) de 0 volt, est appliqué à l'autre électrode de mesure (10, 11) respective, et donc une tension alternative (UR) est appliquée entre les électrodes de mesure (10, 11) et au moins une grandeur de mesure (UM1, UM2, UD) corrélée avec la tension alternative (UR) et avec une conductivité d'un milieu (2) se trouvant entre les électrodes de mesure est mesurée, **caractérisé en ce qu'**à l'aide d'un premier moyen de commutation (16) de l'agencement de commutation (4), la première électrode de mesure (10) est sélectivement couplée à un premier raccordement (12) auquel un premier potentiel positif (U1) est appliqué, ou à un deuxième raccordement (13) auquel un deuxième potentiel positif plus faible par rapport au premier potentiel (U1), ou un potentiel (U2) de 0 volt, est appliqué, et **en ce qu'**à l'aide d'un deuxième moyen de commutation (17) de l'agencement de commutation (4), la deuxième électrode de mesure (11) est sélectivement couplée au premier raccordement (12) ou au deuxième raccordement (13).
